# EUROPEAN PATENT SPECIFICATION

(11) **EP 1 757 141 B1**
(45) Date of publication and mention of the grant of the patent: **13.11.2019**
(21) Application number: 05738210.3
(22) Date of filing: 27.04.2005
(51) Int. Cl.: H04W 4/06, H04W 8/18, H04W 36/00, H04W 36/04, H04W 16/32, H04W 36/20, H04W 72/00

(54) **GROUP CALL ESTABLISHMENT IN A MOBILE COMMUNICATIONS SYSTEM**
AUFBAU EINES GRUPPENANRUFS IN EINEM MOBILKOMMUNIKATIONSSYSTEM
ETABLISSEMENT D'APPEL DE GROUPE DANS UN SYSTEME DE COMMUNICATIONS MOBILES

(30) Priority: 27.04.2004 GB 0409388; 21.05.2004 GB 0411427; 16.07.2004 GB 0416039
(43) Date of publication of application: 28.02.2007
(73) Proprietor: Sepura plc, Cambridge CB4 1GR (GB)
(72) Inventor: RAYNE, Mark, Wentworth 5 St. James Close Stretham, Cambridgeshire CB6 3ND (GB)
(74) Representative: Dehns
(86) International application number: PCT/GB2005/001610
(87) International publication number: WO 2005/104595

(56) References cited:
- EP-A- 1 280 370
- GB-A- 2 322 520
- US-A- 5 465 391
- US-A- 5 983 107
- US-A1- 2002 082 029
- US-B1- 6 725 052

## Description

The present invention relates to mobile communications systems, and in particular to a method, and corresponding apparatus, for establishing a group call in such systems.

As is known in the art, a group call in a mobile communications system is a mechanism whereby a group of plural radio users may listen simultaneously to conversations between members of the group. Typically, one member of the group talks, and all the other group members listen to that group member (i.e. it is a point to multipoint call). When one group member has finished transmitting, another group member may speak, with their transmission being similarly broadcast to all the other group members (subject to any limitations of communication access or range, etc.). Indeed, such "all-informed" group calls are the main mode of operation for many users of mobile communications systems, such as public safety organisations and law-enforcement agencies.

In non-trunked mobile communications systems, such group calls are typically achieved by assigning all members of the group to a single "channel", which channel comprises two frequencies, one for the uplink (communication from the mobile units to the base station (system infrastructure)), and one for the downlink (communication from the base station (system infrastructure) to the mobile units). Such an arrangement facilitates messages that are received on the uplink frequency being immediately retransmitted on the downlink frequency, i.e. "all-informed" group call operation.

Other mobile communications systems are arranged on a trunked basis. Examples of these systems include trunked private mobile radio systems such as MPT 1327 and TETRA (TErrestrial Trunked RAdio). As is known in the art, such trunked mobile communications systems are usually arranged on a cellular basis, i.e. use a number of individual cells, each having its own base site (base station transceiver), to cover a larger geographical area.

In cellular trunked radio systems such as TETRA, all-informed group calls are typically established by sending members of the group registered in the same cell (at the same base site) to a single traffic channel that permits one uplink transmission and multiple listeners on the downlink (i.e. in a similar manner to a non-trunked system). However, this must be done for each cell where group members are registered (so that all group members can receive the call). Thus, in practice, the group call will be transmitted on several different traffic channels, one for each cell where a group member is registered.

It is becoming increasingly common for mobile communications systems to have multiple layers of overlapping cells of different sizes, for example to provide more efficient use of the radio spectrum for individual (point-to-point) calls, particularly in areas where dense communications use is expected, such as at airports, railway stations, city centres, etc. Such systems use, for example, "micro" cells (e.g. of 1 km radius) and "pico" cells (e.g. of 100 metre radius) to overlay "macro" cells (e.g. of 20 km radius), and mobile units choose or are assigned a cell from one of the overlapping layers of radio coverage on the basis of, e.g., signal quality, speed of travel, etc. In general, it is intended that stationary or slow-moving mobile units will preferentially use picocells, whereas mobile units outside the coverage range of micro or picocells or that are moving more rapidly (such that, e.g., the use of smaller cells would necessitate frequent hand-offs to new cells) will preferentially use macrocells.

It is also the case that in any given geographical area, and in any overall mobile communications system, there may be different, overlapping communications networks (e.g. offered by different service providers), which networks may operate according to the same or different communications standards or protocols (such as a TETRA network and a GSM network, for example), and which may, e.g., offer different sized communications cells.

The Applicants have recognised that while the provision of, e.g., picocells and microcells may permit the more efficient use of the radio spectrum for multiple individual (point-to-point) calls, they may not be so efficient for group calls (point-to-multipoint) calls.

The Applicants believe therefore that there remains scope for improved group call facilities in mobile communications systems that have multiple overlapping cells having different coverage areas.

US 5,983,107 describes a mobile radio communications system having a multi-layer cell structure. GB 2 322 520 A describes a method for selecting cells for use in a group call. In this document, a distribution of group call users are determined across a cell pattern in terms of the highest number or percentage of members in each cell. The cell with the largest number or percentage of users is defined as the preferred site. The communications system then periodically transmits to the group call users the preferred site as determined above. This preferred site group call service requires that the infrastructure periodically checks to determine how many members of the group are currently registered at each site. The site at which the greatest number of group members are registered is marked as the preferred site. This preferred site is then broadcast at each site at which group members are registered. Each mobile station then knows to use the currently preferred site whenever possible.

US 5465391 discloses a method for allocating a traffic channel to a group call and transmitting a group call message to mobile radios of the group to switch to the allocated traffic channel.

According to a first aspect of the present invention, there is provided a method of establishing a group call in a cellular mobile communications system as claimed in claim 1.

According to a second aspect of the present invention, there is provided an apparatus for establishing a group call in a cellular mobile communications system as claimed in claim 14.

In the present invention, the cell or cells selected for use for the group call are selected on the basis of the geographical area covered by each individual cell. Such a selection can be used, e.g., to facilitate minimising the geographical area covered by the radio transmissions for the group call. Additionally or alternatively, it could be used to, e.g., preferentially select larger cells for the group call, thereby naturally reducing the number of cells that are likely to be needed for the group call. Indeed, a preferred embodiment of the present invention, where the communications system includes larger and smaller (coverage area) cells, is to preferentially select larger cells for use for the group call.

The present invention facilitates, for example, as will be explained further below, the more efficient use of the available traffic channels and radio spectrum when a group call is to be established.

The present invention should be contrasted, e.g., with the prior art arrangement in which the group call is, e.g., simply established in all cells where a member of the group is currently registered. The Applicants have recognised that in such an arrangement where, for example, the members of the group are registered with a variety of adjacent smaller, e.g., pico, cells, one frequency pair in each cell will have to be assigned to the group call. Such a situation could arise, e.g., for police or customs officers in an airport. As the officers would be essentially stationary but scattered throughout the airport, their mobile units would tend to be registered with local picocells, so that to call them with a group call, a traffic channel would have to be allocated to the group call on each picocell. This is wasteful of the communications system's call capacity, as it uses up a traffic channel in each picocell. As will be explained further below, the present invention can be used to alleviate this problem.

The Applicants have recognised that the most efficient use of the radio spectrum will be achieved by using the minimum number of cells for the group call that can accommodate (cover) all members of the group. For example, maximum radio spectrum efficiency for the group call would be provided by using a radio cell that is large enough to accommodate all members of the group, since in such a case, only one frequency pair would need to be used for the group call.

Thus, in a particularly preferred embodiment, the cell or cells to use for the group call are selected so as to minimise the number of cells that will be used for the group call. This has the effect of minimising the number of traffic channels that will be used for the group call, and hence enhances the efficient use of the traffic capacity of the communications system.

In a particularly preferred embodiment, the cells to use for the group call are also selected on the basis of the geographical distribution of the members of the group. For example, the cell or cells to use could be selected on the basis of the number of group members covered by each cell, for example with those cells that cover (include in their coverage area) the most group members being preferentially selected for use for the group call.

Most preferably a comparison is made between the coverage areas of the cells that are determined to include group members in their coverage areas, and the distribution of the group members, and the cell or cells whose combined coverage areas most closely match the distribution of the group members then selected for the group call. Preferably the selection is also made on the basis of the extent of overlap of the coverage areas of cells, preferably such that the selected cells have less overlap of their coverage areas than other sets of cells that could have been selected. Most preferably the selection is made such that there is reduced or minimal overlap of the coverage areas of the selected cells.

These arrangements facilitate the selection of the minimal number of cells to use for the group call, whilst still ensuring that the group call reaches all the desired group members.

In a preferred embodiment, the cell or cells to use for the group call are also selected so as to minimise the geographical area covered by the radio transmissions for the group call. Thus, preferably, the smallest cell or set of cells that will cover the desired group members is preferably preferentially selected for use for the group call. This can again enhance the efficiency of use of the available radio spectrum, since it may, for example, reduce the extent of co-channel interference that may be caused by the group call.

As will be appreciated from the above, in a particularly preferred embodiment of the present invention, the cell or cells to use for the group call are selected so as to minimise the use of individual traffic channels for the call, and, most preferably, so as to minimise the area covered by the radio transmissions for the group call. For any given situation, there will tend to be an optimum set of cells that reaches all the desired group members using the smallest possible number of traffic channels, and with the smallest geographical coverage. For example, the optimum would be a single cell that covers just enough geographical area to reach (encompass) all the desired group members. It is this optimum set of cells that is preferably preferentially selected.

It will be appreciated that the actual cells that are selected for the group call on the above basis can and will vary, depending on the circumstances and in particular on the geographical distribution of the group members that it is desired to include in the call. For example, if the group is limited in spatial distribution, a single larger cell, e.g. a macrocell or microcell may cover all group members and so should be used. Alternatively, if the group members are more widely scattered, the group call may need to be distributed to several cells, such as a combination of larger and smaller cells, e.g. a combination of macrocells and a few microcells and/or picocells.

It should also be appreciated in this regard that it may not always be possible to use the identified optimum set of cells for the group call due to, e.g., other conditions in the system, such as a lack of available traffic channels in the selected cells. In that case, the group call could, e.g., either be delayed until the selected cells are available, or, alternatively, be established using a different set of cells (that are still, preferably, selected in accordance with the above principles so far as is possible). For example, in the event that the traffic channels of the largest cells were all in use, traffic channels of smaller cells could be used for the group call.

As will be appreciated by those skilled in the art, in operation of the present invention, at the time that the group call is requested (e.g. the group call request is received), the group members are likely to be registered with a variety of cells of different sizes and types (e.g. depending on their speeds and received qualities of service), which set of cells is unlikely to correspond to the cell or cells that will be selected for the group call.

Thus, the present invention includes a step of or means for assigning or transferring one or more of the group members for the group call to a cell or cells of the cells selected for the group call. Such assignment could involve, e.g., assigning one or more group members to one of the cells selected for the group call, and assigning one or more other group members to another, different cell selected for the group call, and so on. Such assignment of group members to a new cell for the group call is preferably based on, e.g., the location of the group member or members and their geographical distribution, e.g. in relation to the cell or cells selected for the group call. The new cell will, as discussed above, typically (and preferably) be a larger cell than the group member's current cell, although that does not have to and may not always be the case.

Thus the present invention preferably also includes a step of or means for determining whether a group member should be transferred to a different cell (e.g. different to the cell it is currently registered with) for the group call, and, preferably, includes a step of or means for choosing a different cell for the group call for a group member or members, if appropriate.

Such reassignment of group members to new cells can be achieved as desired. Preferably the base site or station where the group member is registered is determined, and that base site used to signal an instruction to the group member to transfer to the new cell, e.g. by instructing the group member to transfer to the group call on a traffic channel of the new cell. The transfer instruction is preferably "group-addressed" so that it will apply to all group members who are registered with the base site in question, as that reduces the number of such transfer instructions that may need to be sent.

The signalling that is used to transfer the mobile unit (group member) to the new cell comprises a channel assignment or "go to channel" message that sends the group member's mobile unit to the new channel (frequency) on the different cell of the system. This go to channel message can, as is known in the art, be combined with other messages, such as a message containing details about the group call that is being set up.

The go to channel message preferably includes all information and data that the mobile unit may need to be able to participate in the group call on the new channel (i.e. such that once it is on the new channel, the mobile unit does not need to seek further information to be able to start communicating). This helps to avoid the need for the mobile unit to, e.g., reregister on the new cell (which could otherwise introduce undesirable delays in the call set-up).

(It should be noted here that this does not preclude the need for the mobile unit potentially to have to obtain information on the new cell or channel to allow it to synchronise to the new channel on the new cell (although this may not be necessary if the two channels are approximately synchronised (i.e. close enough for the training sequences, or synchronisation symbols, etc., on the new channel to pull the mobile unit into synchronisation with the new channel; if not, the mobile unit may need to retrieve synchronisation information for the new channel from the system)).

Thus, as well as indicating the frequency (and, e.g., timeslot(s), in the case of a TDMA (Time Division Multiple Access) system, or spreading code in the case of a CDMA (Code Division Multiple Access) system) of the channel to be used for the group call, the signalling to transfer the group member to the new cell for the group call preferably also includes any appropriate system or network identifier, colour (scrambling) code and/or encryption information (e.g. keys or key identifier(s)) that may be necessary to allow the mobile unit to participate in the group call. (As is known in the art, many communications systems and networks use mechanisms, such as a system or network identifier, scrambling code (colour code) and/or encryption to prevent terminals from being able to understand, and from responding to, signalling from another channel, cell, network or system, etc. As the mobile unit is being transferred to a new cell, it will need such information to be able to communicate on the new cell.)

A group member who is already registered to a cell that will be used for the group call does not need to be and preferably isn't transferred to a new cell for the group call, but instead can simply be assigned to the group call on its existing cell in the normal manner.

Where a group member has been transferred to a new cell for the group call, then a group member (mobile unit) that has been transferred to another cell of the communications system for the group call is returned automatically (i.e. without the need for user intervention) to its previous cell on termination of its participation in the group call.

In a particularly preferred such arrangement, the group member's mobile unit "remembers" that it has been transferred from a different cell and returns itself automatically to that cell once its participation in the group call has finished (e.g. it receives an end of call message (call cleardown message) and/or end of call "go to control channel" message on the new cell). In this arrangement, the mobile unit preferably stores the fact that it has come from a different cell, preferably together with any necessary data cell and/or data channel details (such as frequency, timeslot, colour code, system or network identifier, etc., as discussed above in relation to the message to transfer the mobile unit to the new cell), and then, if it has such an indication stored, seeks to return its original cell once its participation in the group call has finished. The mobile unit.could also, e.g., record any synchronisation differences it observed between its initial and the new channel, and apply those differences in reverse when returning to its initial cell.

In such an arrangement, the mobile unit could, e.g., ignore any "go to channel" instructions in a "go to channel" message terminating the group call on the new cell and return directly to its stored cell, or it could obey the "go to channel" instructions and go to the, e.g., control channel indicated, and then return itself to its stored cell thereafter. In the latter case, therefore, the mobile unit will return to its original cell via an intermediate, e.g., control, channel.

It should be noted here that the mobile unit is preferably arranged to respond and act in the above manner whether the "go to channel" instructions are explicitly broadcast to the mobile unit, or are as a result of an implicit or automatic channel allocation operation of the system. For example, in a TETRA system, if the present channel is removed for any reason (e.g. because there is an implicit channel allocation in signalling received by the mobile unit, or the mobile unit itself observes a change in the channel usage marker), then the TETRA protocol requires a mobile unit to return to the main control channel (MCCH) of the cell. In the present embodiments and arrangements of the present invention, it is preferred for the mobile unit to ignore this form of channel reallocation as well, and to, instead, return to its original cell (e.g. in the manners discussed above) in the event of such an "implicit" channel reallocation. This applies to all arrangements where the mobile unit is to be automatically returned to its original cell on termination of its participation in the group call.

An advantage of these arrangements is that they avoid the need to include additional signalling bits in the go to channel messages that are sent to the mobile unit (e.g. to send the mobile unit to the group call or after the group call has finished) for ensuring that the mobile unit returns to the cell it was previously on.

In another preferred embodiment, the mobile unit is arranged to return automatically to its initial cell by including appropriate commands and/or data in the signalling that transfers the mobile unit from that cell in the first place, and/or by signalling the mobile unit to return to its original cell once the group call on the new cell has finished.

In one preferred such arrangement, the initial signalling on the cell to transfer the mobile unit to the group call includes an instruction to the mobile unit that it can expect to return to its original cell (or channel) at the end of its participation in the group call. This could be achieved, e.g., by setting an appropriate bit in this initial signalling (the "go to channel" message), for example such that a parameter is included in the message sending the mobile unit to the new cell, advising the mobile unit that it should return to its original cell when the group call terminates.

It is common in mobile communications systems for the system to signal to mobile units at the end of a group call that they should, e.g., return to the main control channel of the cell after the call has finished. This is typically done by sending a "go to channel" message specifying the control channel at the end of the call. As is known in the art, this go to channel message can be and typically will be combined with other messages, such as an "end of call" (call cleardown) message.

Thus another way to return a mobile unit to its original cell or channel would be to include in this end of call "go to channel" message an instruction that if a mobile unit came from another cell, it should return to that cell, rather than the control (or other channel) otherwise indicated in the go to channel message. In this way, the go to channel message at the end of the group call will tell all mobile units that came from another cell that they can ignore the indicated channel in the go to channel message and instead return to their original cells. This could be achieved, e.g., by providing a special field or bit in the go to channel signalling that can be set appropriately.

An advantage of this arrangement is that the system infrastructure can control whether it sends a mobile unit that has come from a different cell back to that cell or not.

In a preferred embodiment, the mobile units can be selectively automatically returned to their initial channel or cell. The mobile unit may, as discussed above, be returned to its initial channel or cell by the system infrastructure or by the mobile unit itself.

It will be appreciated in these arrangements that a mobile unit that was originally registered on one cell of the communications system is temporarily transferred to a new cell during the group call, and then returns to its original cell after its participation in the group call has terminated.

The cell or cells of the communications system that cover the members of the group that it is desired to call can be determined as desired. The process preferably involves determining the locations of the desired group members and then mapping the (known) coverage areas of the cells of the system to the locations of the group members, preferably taking account of any uncertainty in the determined locations of the group members. Thus the present invention preferably includes a step of or means for comparing the locations of the group member or members to be called with the coverage areas of a cell or cells of the communications system. In this way, the system can determine all the cells that could be used for the group call (i.e. the set of cells from which the actual selection for the group call will be made).

Any suitable arrangements can be used for this process. Thus, for example, a location determining system, such as a GPS system, could be used to determine the locations of the group members and then the cells that cover those locations determined. In such an arrangement, group members' mobile units could, e.g., determine their positions using, e.g., GPS, and report their positions periodically to the system infrastructure (e.g. to a "location server" in communication with the system infrastructure), so that the current positions of the group members are known (at least approximately). Such location messages could be sent, e.g., using packet data or short data messages (SDS messages).

In a particularly preferred embodiment, the system infrastructure determines the location of the group members by determining each cell where a member or members of the group are currently registered, and then determines the cells whose coverage areas overlap with or include the cells where members of the group are registered. Most preferably those cells that fully encompass (overlie) a cell or cells where a group member is registered are determined. This will allow, for example, for the fact that a group member's location could in fact be anywhere within the cell it is registered with (i.e. the uncertainty in the group member's location is equal to the coverage area of the cell that it is registered with), by ensuring that any new cell will completely include the locations where the group member could be.

The system infrastructure preferably includes or has access to a database that stores information relating to how the different cells and cell layers of the system overlap in coverage to help facilitate these operations.

It will be appreciated that the group members to be included in the group call need not necessarily be all defined members of the group, as, for example, some group members may be unavailable for communications purposes. Thus where references are made to group members herein, it should be understood that that need not necessarily mean all theoretically possible group members, but also envisages, e.g., a subset of any given, predefined call group, such as only those group members who are currently "active" or registered with a base site, or who, e.g., can be contacted or their location determined within a given time period.

It should also be noted in this regard that while, as will be appreciated by those skilled in the art, the communications system will typically comprise a single communications network (e.g. provided by a single service provider) using the same, single communications protocol, it is also envisaged that the present invention can be applied and used over plural different communications networks, using the same or different communications protocols and standards. In the latter case, the communications system will accordingly comprise plural different communications networks that are appropriately interlinked (at least to the extent necessary to operate in accordance with the present invention) .

Thus, in one preferred embodiment, the communications system will comprise a single communications network operating to a single communications protocol or standard (e.g. a TETRA network). However, in other embodiments, the communications system may comprise plural different communications networks. These networks may all operate to the same communications protocol or standard (e.g. all be TETRA networks), or may operate to different communications protocols and standards (e.g. there may be a TETRA and/or a GSM network, and a satellite-based communications network, etc.). In these latter cases, the cell or cells that are selected for the group call may accordingly be on the same or different communications networks of the communications system.

The group call can be initiated and otherwise set up, save for the particular features of the present invention discussed above, as desired. It is most preferably set up in the normal manner for the communications system and network or networks in question (subject to any changes necessary to implement the present invention). Thus, for example, a user will make a request for a group call, the system will identify the group members and their locations, and, in accordance with the present invention, select the cells to use for the group call and then transmit appropriate call set up messages to establish the group call. Once the call has been established, it can then proceed as normal. After the group call has been terminated, the group member's mobile stations return to monitoring a control channel of the system in the normal manner (as discussed above, on their original cells).

The present invention is directed to communications systems that include two or more overlapping layers of cells (i.e. such that the layers have some or all of their coverage areas in common). The present invention can be particularly conveniently applied to such "layered" arrangements where, for example, the cells in each individual layer are of a (generally) common size, but the cells of different layers have different sizes. An example of such an arrangement would be where the communications system has a layer or layers of micro and/or pico cells overlying a layer of macrocells. In such a case the present invention could, e.g., be used to place a group call in cells of the most appropriate layer, e.g. by identifying the layer whose cells best matches the distribution of group members.

While it is preferred that the techniques of the present invention are used whenever a group call is to be set up (as that will facilitate more optimum usage of system communications traffic capacity), this is not essential and the present invention could be used on a more selective basis if desired. For example, the present invention could be used for group calls only when there is no capacity for the group call in the cells that group members are already registered to, and/or, e.g., only when all lower-layer (smaller) cells are fully utilised.

Similarly, while it is preferred to try to identify the optimum cell or set of cells to use for the group call, this is not essential, and a less complex arrangement could be used if desired. For example, the system could be arranged to preferentially allocate the largest available cells (and/or, e.g., cells of the largest cell layer, e.g. the macrocell layer) to the group call, without necessarily trying to determine if a suitable smaller common cell (or smaller cell-size layer) is or could be available. This would still tend to reduce the number of traffic channels to be used for the group call, and also leave smaller cells free for preferential use for individual (point-to-point) calls.

In a preferred embodiment, any handover (handoff) mechanism of the communications system (i.e. whereby a mobile unit can be transferred to a new cell during a call due to, e.g., loss of signal quality) is arranged such that it is aware of when a group call is in progress, and in that situation, operates to preferentially hand a mobile unit to another cell that has already been selected for the group call and/or to a larger cell. This helps to avoid the danger that handover during the group call will lead to mobile units diffusing down to smaller cells during the progress of the group call.

It is also accordingly preferred that where it is necessary to hand a mobile unit over to a smaller cell during the group call, the system attempts to return the mobile unit to a larger cell at the earliest opportunity.

The above applies whether the handover mechanism is executed in the system infrastructure, in the mobile units themselves, or by a combination thereof. Where, as in a TETRA system, handover is controlled usually by a mobile unit, the cells of the communications system could, and, indeed preferably do, e.g., broadcast information about their suitability for group calls, e.g., by giving, where appropriate, an indication that the cell is a higher level cell suitable for use in wide-area group calls, etc., and that the mobile unit should preferentially choose such a cell if it has to initiate handover during a group call, to assist the mobile units in their handover selection processes.

As will be appreciated by those skilled in the art, the present invention is applicable to mobile communications systems generally, and thus also extends to a mobile communications system, apparatus for a mobile communications system, terminals (e.g. mobile stations (units) or base stations) for a mobile communications system, etc., incorporating or that can be operated in accordance with, any one or more or all of the aspects of the present invention discussed herein.

The present invention is particularly, albeit not exclusively, suited to use in the TETRA communications system, and thus the present invention also extends to a TETRA mobile communications system, apparatus for a TETRA mobile communications system, terminals (e.g. mobile stations (units) or base stations) for a TETRA mobile communications system, etc., incorporating or that can be operated in accordance with, any one or more or all of the aspects of the present invention discussed herein.

As will be appreciated by those skilled in the art, all the described aspects and embodiments of the invention can include, as appropriate, any one or more or all of the preferred and optional features of the invention described herein, without departing from the scope of the invention as defined in the appended claims.

The methods in accordance with the present invention may be implemented at least partially using software e.g. computer programs. It will thus be seen that when viewed from further aspects the present invention provides computer software specifically adapted to carry out the methods hereinabove described when installed on data processing means, and a computer program element comprising computer software code portions for performing the methods hereinabove described when the program element is run on data processing means. The invention also extends to a computer software carrier comprising such software which when used to operate a communications system, apparatus or terminal comprising data processing means causes in conjunction with said data processing means said system, apparatus or terminal to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software.

The present invention may accordingly suitably be embodied as a computer program product for use with a computer system. Such an implementation may comprise a series of computer readable instructions either fixed on a tangible medium, such as a computer readable medium, for example, diskette, CD-ROM, ROM, or hard disk, or transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

A number of preferred embodiments of the present invention will now be described by way of example only and with reference to the accompanying drawings, in which:
Figure 1 shows schematically a mobile communications system to which the present invention can be applied;
Figure 2 shows schematically an exemplary interconnection scheme for the cells of the communications system shown in Figure 1;
Figure 3 shows schematically the exchange of messages for setting up a group call in the system of Figure 1 in accordance with the present invention; and
Figure 4 shows schematically a channel assignment message in accordance with an embodiment of the present invention.

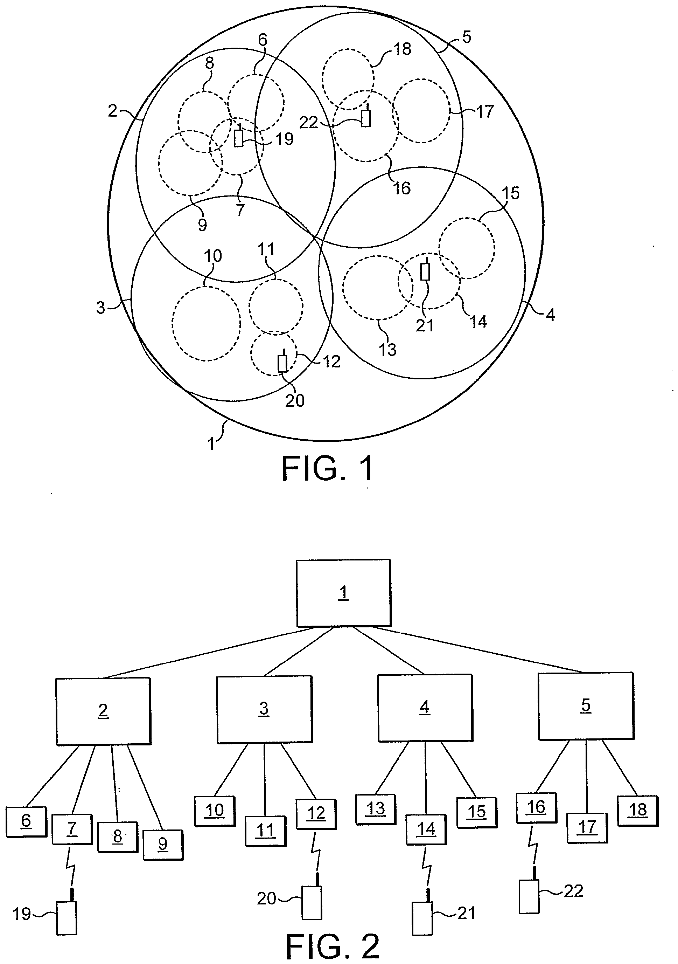

Figure 1 shows schematically the layout of cells in an exemplary mobile communications system to which the present invention can be applied. In the communications system shown in Figure 1, an area covered by a macrocell 1 is also covered by a layer of four microcells 2, 3, 4, 5 and a layer that includes a number of smaller picocells 6, 7, 8, 9, 10, 11, 12, 13, 14, 15, 16, 17, and 18. (Although in Figure 1 only a single macrocell 1 of the communications system is shown, as will be appreciated by those skilled in the art, a typical mobile communications system will include many more overlapping and adjacent cells (both macrocells and microcells and picocells, etc.).)

Figure 1 also shows some exemplary mobile units 19, 20, 21 and 22 that are using the mobile communications system. For the purposes of the present example, it will be assumed that all of these mobile units are carried by pedestrians, and thus, because of their low speed, they are each registered with the respective picocell, 7, 12, 14 and 16, whose coverage area they fall within.

The macrocell 1, microcells 2, 3, 4, 5 and picocells 6-18 of the communications system shown in Figure 1 are interconnected in a suitable manner so that the communications system can keep track of the cell allocation of all mobile units, etc., using the system, and also of how the coverage areas of the different cells are shared and overlap.

Figure 2 shows schematically an exemplary interconnection arrangement for the macrocell 1 with macrocells 2, 3, 4, 5 and picocells 6-18 to facilitate this. In the arrangement shown in Figure 2, at each layer (i.e. macrocell, microcell or picocell layer), the cell sites are capable of determining whether mobile units are present elsewhere in the system (e.g. registered with other cells) and also which mobile units are members of any given call group. Each cell site also has the capability of determining which other cell sites share coverage area with the highest layer (i.e. largest) cell in their area (in this case the macrocell 1). This information can be stored and handled in any appropriate manner.

The cell interconnection arrangement shown in Figure 2 is so-arranged because it reflects the relationship between the lower layer cells and the higher layer umbrella cells, and thereby simplifies the communications system's identification of suitable higher level (larger) cells. However, alternative interconnection schemes would be possible, such as, for example, independent networks at each cell size layer together with inter-layer links, or a single network without hierarchy.

The present invention relates to the situation where a mobile unit, such as the mobile unit 19 in Figure 1, wishes to make a group call to other mobile units using the communications system, such as the mobile units 20, 21 and 22 shown in Figure 1.

As discussed above, in prior art communications systems, when mobile unit 19 requests a group call, the communications system would simply determine which cells the other members of the group are currently registered at, and then provide appropriate frequency pairs for the group call in each cell where a group member is currently registered. Thus in the case of the system illustrated in Figure 1, the group call would proceed by setting up appropriate uplink and downlink frequency pairs in each of the picocells 7, 12, 14(and 16. This has the disadvantage that four frequency pairs are required to include all the mobile units in the group call.

The present invention helps to avoid this problem, as will now be explained.

In accordance with the present invention, in the present embodiment, when the communications system receives the group call request from the mobile unit 19, it first examines its registration database to determine where the members of the group that is being called are currently registered, and then uses its database showing how the different cells and cell layers overlap in coverage to determine the smallest cell that could cover all the group members.

In the present case, as can be seen from Figure 1, the smallest number of cells that can be used to cover the group of mobile units 19, 20, 21 and 22 is achieved by using the macrocell 1 for the group call. Accordingly, the system instructs each of the group members 19, 20, 21 and 22 to transfer to the group call on a traffic channel of the macrocell 1. In this way, the group call can proceed using a single frequency pair of the radio base station serving macrocell 1.

As will be appreciated by those skilled in the art, although in this example it is possible to include all the group members in the group call using the single macrocell 1, that may not always be possible. For example, if other group members are located outside the coverage of macrocell 1, the call may have to be transmitted over additional cells. In other cases, for example if the group is more tightly clustered, a smaller cell, such as a single microcell might suffice.

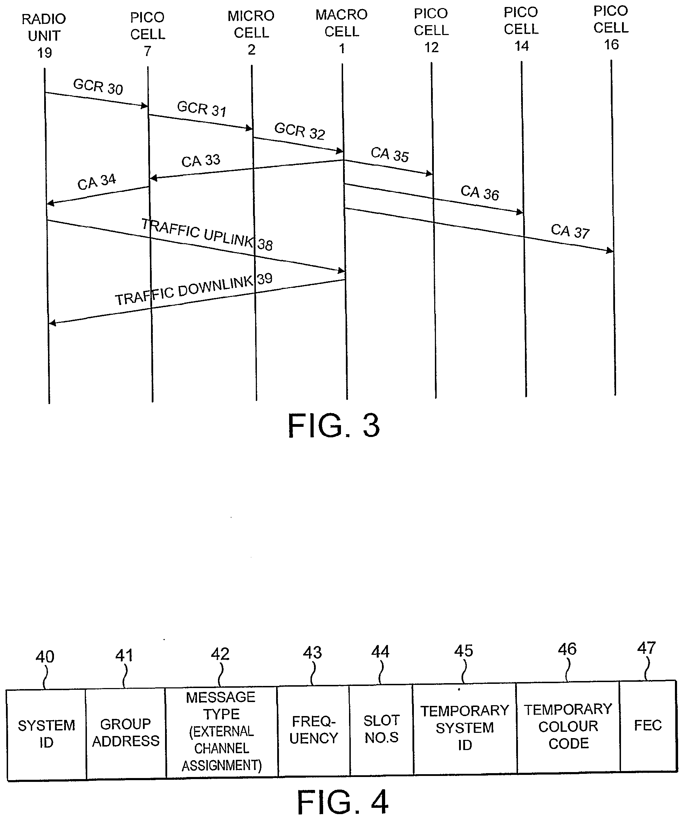

Figure 3 shows schematically and in more detail an exemplary exchange of messages that can be used to establish the group call in the above manner.

As shown in Figure 3, mobile unit 19 first sends its group call request gcr30 for a group call with mobile units 20, 21 and 22, to its registered cell, picocell 7. Picocell 7 identifies the group call request and determines that group members are present at other cells, and accordingly sends the group call request gcr31 to its umbrella cell, microcell 2. Microcell 2 similarly recognises that at least one group member is not registered to its lower layer picocells 6, 7, 8, 9, and accordingly passes a group call request gcr32 up to its umbrella cell, macrocell 1.

Macrocell 1 then determines that all the members of the group to be called are registered at cells under its coverage (i.e. such that it does not need to pass the group call request on to another macrocell), and also that the cells under its coverage where group members are registered are spread across more than one of its microcells 2, 3, 4, 5. Macrocell 1's controlling infrastructure accordingly determines that it is itself the smallest cell common to all the group members and accordingly chooses one of its macrocell 1's own physical channels to use for the group call (i.e. to be the bearer of the group call traffic).

Macrocell 1 accordingly then sends appropriate channel assignment ("go to channel") messages ca33, ca35, ca36 and ca37 to picocells 7, 12, 14 and 16, respectively (being the cells that macrocell 1 has determined the group members are registered at (and accordingly to whose control channels the mobile units for the group call are listening)). (In a simplification of this procedure, the macrocell 1 could instead simply send the channel assignment to all the lower-layer cells (i.e. microcells and picocells) in its coverage area.)

Upon receipt of the channel assignments, the picocells 7, 12, 14 and 16 then send them over the air interface to the relevant group address (e.g. message gcr34 to mobile unit 19 as shown in Figure 3). These channel assignments instruct the mobile units to receive the group call on the channel provided by macrocell 1, rather than on channels controlled by their currently registered cells. In other words, the channel assignments instruct the mobile units to transfer to the group call on the macrocell 1.

Figure 4 shows schematically an exemplary format for the channel assignment message (go to channel message), such as ca34. As shown in Figure 4, this channel assignment message includes a number of fields.

The first field 40 gives the system identifier used by the relevant cell to which the mobile unit is currently registered (e.g. for the picocell 7 for the channel assignment message ca34). Field 41 contains the target group address and field 42 identifies the message type (which in this case is a channel assignment (go to channel) message).

Field 43 defines the frequency of the channel that the mobile unit is to be transferred to, and field 44 defines the timeslots which comprise the channel in question (which in the case of a speech call would probably only be a single timeslot, but for a data call may comprise more than one timeslot). (This is for a TDMA (Time Division Multiple Access) system; in a CDMA (Code Division Multiple Access) system, the frequency and the spreading code would be specified by fields 43 and 44 instead.)

The frequency in the field 43 may be an absolute frequency, or define an offset from a predefined base frequency, as is known in the art. A convenient way to identify which timeslots are allocated in field 44 is to use a bit map.

Field 45 provides a temporary system identification that the mobile unit will use for the duration of the group call. This system identification is "temporary" in the sense that it is used temporarily by the mobile unit while it is participating in the group call. However, it can be and typically will be the permanent system identification of the cell that the group call channel is on (in the present example of the macrocell 1) .

Field 46 gives the colour (scrambling) code to be used for the group call.

Data fields 46 and 46 provide the mobile unit with all the information it requires for a switch to the new traffic channel (i.e. such that it does not have to obtain that information from another source before it can participate in the group call).

To further enhance such "fast" switching to the group call, the channel assignment message could also include, for example, any further information that would be necessary to allow the mobile unit to participate "immediately" in the group call on the new cell, such as any necessary encryption data (such as an identifier for the encryption key to be used, or even an encrypted (sealed) version of the encryption key or keys to be used (where the system thinks that the mobile unit does not possess the key or keys in use on the cell where the call is to take place)).

Finally, field 47 contains any necessary error correction information, such as a forward error correction code for the channel assignment message.

The size of the fields shown in the message of Figure 4 can, as will be appreciated by those skilled in the art, be selected as desired, and will in general depend on implementation details of the mobile communications system in question.

Upon receipt of the channel assignment message ca34, the mobile unit 19 (and the other mobile units 20, 21 and 22, similarly) will immediately tune to the new channel of the macrocell 1 indicated by the frequency field 43 and timeslot field 44 in the channel assignment message, and use the indicated temporary system identifier 45, temporary colour code 46, and any provided encryption data, to participate in the group call on that channel. (Depending on the system protocol details, the mobile units may assume that they have permission to transmit as soon as they reach the assigned channel, or may have to wait for the macrocell 1 to tell them when they may start transmission.)

The group call now proceeds through the macrocell 1, using only one RF channel.

At the end of the group call, the communications system will, as is known in the art, send via the macrocell 1 a call "cleardown" message. Such a message will typically instruct the mobile units participating in the group call to revert to monitoring the main control channel of the cell used for the group call (i.e. in this case the macrocell 1), using a group-address channel assignment message specifying the main control channel frequency for the cell in question.

However, in the present embodiment, the system is arranged such that when the group call is cleared, the individual mobile units will revert to monitoring the control channels that they were previously using (i.e. such that the mobile units will return to the cells that they were registered at before the group call was received), using, as appropriate, the system identifiers and colour codes, etc., that they were previously using on their previous cell. This is achieved as follows.

The mobile units, 19, 20, 21 and 22, when they receive the "go to channel" message to participate in the group call on the macrocell 1, store in their memory details of their original (pico)cells. Then, when the mobile units receive the end of call signalling including an explicit or implicit "go to channel" message on the macrocell 1 when the group call has finished, they obey that message and return to the main control channel on the macrocell 1, but then determine from their memory that they were previously registered on a different cell (the picocells 7, 12, 14 and 16), and accordingly retrieve the necessary channel information that they have stored and return themselves to the main control channel on their respective, previous, picocells. (Alternatively, the mobile units could return directly to the main control channel on their original cells using the data that they have stored when they receive the group addressed "go to channel" message or implicit "go to channel" indication at the end of the group call, without proceeding first to the main control channel of the macrocell 1 indicated in the group-addressed "go to channel" message.)

Similarly, should a mobile unit's user choose to leave the group call, then when the user clears down out of the group call, the mobile unit determines from its memory that it was previously on a different cell, and accordingly retrieves the necessary cell and channel information that it has stored and returns itself to the main control channel on its previous cell.

Other arrangements to return the mobile units to their original cells could also be used. For example, the "go to channel" message at the end of the group call on the macrocell 1 could include a special bit that can be set to have a meaning that any mobile unit that came from another cell should return to that cell and ignore any frequency and slot instructions in the "go to channel" message received on the macrocell 1.

Additionally or alternatively, the original "go to channel" message sent on the mobile unit's initial cell (i.e. sent to transfer the mobile unit to the group call on the macrocell 1) could include a bit that instructs the mobile unit that it should return to the main control channel on its original cell at the end of the group call on the macrocell 1.

As will be appreciated by those skilled in the art, if a mobile unit loses contact with the traffic channel allocated for the group call during the group call, it may require handover, and may be handed over to a lower-layer (smaller) cell. In the present embodiment, the handover mechanism (whether executed in the system infrastructure and/or mobile units) is accordingly made aware that a group call is in progress, and arranged to look to return any mobile unit that is handed over to the appropriate group call cell (or a higher-layer (larger) cell) at the earliest opportunity. This helps to avoid the danger that mobile units will diffuse down to lower-layer (smaller) cells as the group call progresses.

As can be seen from the above, the present invention, in its preferred embodiments at least, provides a method of establishing group calls that allows a group call to be constrained to using the least possible number of traffic channels, instead of, for example, consuming a traffic channel in each cell when a group member is registered. This has the beneficial effect of increasing the capacity of the communications system for individual calls and other group calls.

This is achieved in the preferred embodiments at least, by identifying the cells that cover the group members most efficiently, and then assigning the group members to those cells for the duration of the group call. This is done, for example, by the communications system determining where members of the group are currently registered and how the different cells and cell layers overlap in coverage, and then using that information to determine the smallest cell or smallest set of cells that can cover all the group members.

Furthermore, the method of connecting the group call of the present invention, in its preferred embodiments at least, provides frequency efficiency with very little time delay in establishing the call, just as is required by many mobile communications system users, and avoids, for example, the need for mobile units to re-register at the cells to be used for the group call.

## Claims

1. A method of establishing a group call in a cellular mobile communications system that includes two or more overlapping layers of cells (1, 2, 3, 4, 5, 7, 12, 14, 16) having different coverage areas, the method comprising:
when a group call is to be established, determining the cells (1, 2, 3, 4, 5) of the communications system whose coverage areas cover a cell or cells (7, 12, 14, 16) of the communication system where a member or members (19, 20, 21, 22) of the group to be called is or are registered, respectively, these determined cells forming the cells (1, 2, 3, 4, 5) that could be used for the group call;
selecting, from said cells that could be used for the group call, the cell or cells (1) to use for the group call on the basis of the individual coverage areas of the cells (1, 2, 3, 4, 5) that could be used for the group call;
transferring one or more of the group members (19, 20, 21, 22) for the group call to a cell or cells (1) of the cells selected for the group call by transmitting a go to channel message that sends the group member's mobile unit to a traffic channel of a cell (1) selected for the group call; and
returning a group member (19, 20, 21, 22) that has been transferred to another cell (1) of the communications system for the group call automatically to its previous cell (7, 12, 14, 16) on termination of its participation in the group call.

2. The method of claim 1, comprising selecting the cell or cells (1) to use for the group call so as to minimise the number of cells that will be used for the group call.

3. The method of claim 1 or 2, comprising selecting the cell or cells (1) to use for the group call further on the basis of the geographical distribution of the members (19, 20, 21, 22) of the group.

4. The method of claim 3, comprising:
comparing the coverage areas of cells (1, 2, 3, 4, 5) that are determined to include group members (19, 20, 21, 22) in their coverage areas, and the distribution of the group members (19, 20, 21, 22); and
selecting the cell or cells (1) to use for the group call further on the basis of that comparison.

5. The method of any one of the preceding claims, comprising selecting the cell or cells (1) to use for the group call further on the basis of the extent of overlap of the coverage areas of cells (1, 2, 3, 4, 5) whose coverage areas have been determined to cover a group member or members.

6. The method of any one of the preceding claims, comprising preferentially selecting larger cells (1) for the group call.

7. The method of any one of the preceding claims, wherein the go to channel message includes the identity of the cell (1) selected for the group call, together with additional information to allow the group member (19, 20, 21, 22) to receive correctly communications transmitted on the cell (1) selected for the group call.

8. The method of claim 7, wherein the additional information includes details of a scrambling code and encryption that is to be used on the cell (1) selected for the group call.

9. The method of any preceding claim, wherein group members (19, 20, 21, 22) can be selectively automatically returned to their previous cell (7, 12, 14, 16).

10. The method of any one of the preceding claims, wherein, while the group call is in progress, a handover mechanism of the communications system is arranged to preferentially hand group members (19, 20, 21, 22) over to cells (1) that have been selected for the group call.

11. The method of any one of the preceding claims, wherein, while the group call is in progress, a handover mechanism of the communications system is arranged to preferentially hand group members (19, 20, 21, 22) over to larger cells (1).

12. The method of any one of the preceding claims, wherein the communications system comprises a single communications network.

13. The method of any one of claims 1 to 11, wherein the communications system comprises plural different communications networks.

14. An apparatus for establishing a group call in a cellular mobile communications system that includes two or more overlapping layers of cells (1, 2, 3, 4, 5, 7, 12, 14, 16) having different coverage areas, the apparatus comprising:
means for, when a group call is to be established, determining the cells (1, 2, 3, 4, 5) of the communications system whose coverage areas cover a cell or cells (7, 12, 14, 16) of the communication system where a member or members (19, 20, 21, 22) of the group to be called is or are registered, respectively, these determined cells forming the cells (1, 2, 3, 4, 5) that could be used for the group call;
means for selecting, from said cells that could be used for the group call, the cell or cells (1) to use for the group call on the basis of the individual coverage areas of the cells (1, 2, 3, 4, 5) that could be used for the group call;
means for transferring one or more of the group members (19, 20, 21, 22) for the group call to a cell or cells (1) of the cells selected for the group call by transmitting a go to channel message that sends the group member's mobile unit to a traffic channel of a cell (1) selected for the group call; and
means for returning a group member (19, 20, 21, 22) that has been transferred to another cell (1) of the communications system for the group call automatically to its previous cell (7, 12, 14, 16) on termination of its participation in the group call.

15. The apparatus of claim 14, comprising means for selecting the cell or cells (1) to use for the group call so as to minimise the number of cells that will be used for the group call.

16. The apparatus of claim 14 or 15, comprising means for selecting the cell or cells (1) to use for the group call further on the basis of the geographical distribution of the members (19, 20, 21, 22) of the group.

17. The apparatus of claim 16, comprising:
means for comparing the coverage areas of cells (1, 2, 3, 4, 5) that are determined to include group members (19, 20, 21, 22) in their coverage areas, and the distribution of the group members (19, 20, 21, 22); and
means for selecting the cell or cells (1) to use for the group call further on the basis of that comparison.

18. The apparatus of any one of claims 14 to 17, comprising means for selecting the cell or cells (1) to use for the group call further on the basis of the extent of overlap of the coverage areas of cells (1, 2, 3, 4, 5) whose coverage areas have been determined to cover a group member or members (19, 20, 21, 22).

19. The apparatus of any one of claims 14 to 18, comprising means for preferentially selecting larger cells (1) for the group call.

20. The apparatus of any one of claims 14 to 19, wherein the go to channel message includes the identity of the cell (1) selected for the group call, together with additional information to allow the group member to receive correctly communications transmitted on the cell (1) selected for the group call.

21. The apparatus of any one of claims 14 to 20, comprising handover means arranged to, while the group call is in progress, preferentially hand group members (19, 20, 21, 22) over to cells (1) that have been selected for the group call.

22. The apparatus of any one of claims 14 to 21, comprising handover means arranged to, while the group call is in progress, preferentially hand group members (19, 20, 21, 22) over to larger cells (1).

23. The apparatus of any one of claims 14 to 22, wherein the communications system comprises a single communications network.

24. The apparatus of any one of claims 14 to 22, wherein the communications system comprises plural different communications networks.

25. A computer program element comprising computer software code portions for performing the method of any one of claims 1 to 13 when the program element is run on data processing means.

## Patentansprüche

1. Verfahren zum Aufbau eines Gruppenanrufs in einem zellularen Mobilkommunikationssystem, das zwei oder mehr überlappende Schichten von Zellen (1, 2, 3, 4, 5, 7, 12, 14, 16) mit unterschiedlichen Abdeckungsbereichen aufweist, wobei das Verfahren umfasst:
wenn ein Gruppenanruf aufzubauen ist, Bestimmen der Zellen (1, 2, 3, 4, 5) des Kommunikationssystems, deren Abdeckungsbereiche eine Zelle oder Zellen (7, 12, 14, 16) des Kommunikationssystems abdecken, in der/denen ein Mitglied oder Mitglieder (19, 20, 21, 22) der anzurufenden Gruppe registriert ist beziehungsweise sind, wobei diese bestimmten Zellen die Zellen (1, 2, 3, 4, 5) bilden, die für den Gruppenanruf verwendet werden könnten;
Auswählen der für den Gruppenanruf zu verwendenden Zelle oder Zellen (1) aus den Zellen, die für den Gruppenanruf verwendet werden könnten, basierend auf den einzelnen Abdeckungsbereichen der Zellen (1, 2, 3, 4, 5), die für den Gruppenanruf verwendet werden könnten;
Übertragen eines oder mehrerer der Gruppenmitglieder (19, 20, 21, 22) für den Gruppenanruf zu einer Zelle oder Zellen (1) der für den Gruppenanruf ausgewählten Zellen durch Übertragen einer go-to-channel-Nachricht, die die Mobileinheit des Gruppenmitglieds sendet, an einen Verkehrskanal einer für den Gruppenanruf ausgewählten Zelle (1); und
automatisches Zurückgeben eines Gruppenmitglieds (19, 20, 21, 22), das zu einer anderen Zelle (1) des Kommunikationssystems für den Gruppenanruf übertragen wurde, zu seiner vorherigen Zelle (7, 12, 14, 16) bei Beendigung seiner Teilnahme an dem Gruppenanruf.

2. Verfahren nach Anspruch 1, umfassend Auswählen der für den Gruppenanruf zu verwendenden Zelle oder Zellen (1), um die Anzahl der Zellen zu minimieren, die für den Gruppenanruf verwendet werden.

3. Verfahren nach Anspruch 1 oder 2, umfassend Auswählen der für den Gruppenanruf zu verwendenden Zelle oder Zellen (1) weiter basierend auf der geografischen Verteilung der Mitglieder (19, 20, 21, 22) der Gruppe.

4. Verfahren nach Anspruch 3, umfassend:
Vergleichen der Abdeckungsbereiche von Zellen (1, 2, 3, 4, 5), die bestimmt sind, Gruppenmitglieder (19, 20, 21, 22) in ihren Abdeckungsbereichen aufzuweisen, und der Verteilung der Gruppenmitglieder (19, 20, 21, 22); und
Auswählen der für den Gruppenanruf zu verwendenden Zelle oder Zellen (1) weiter basierend auf diesem Vergleich.

5. Verfahren nach einem der vorstehenden Ansprüche, umfassend Auswählen der für den Gruppenanruf zu verwendenden Zelle oder Zellen (1) weiter basierend auf dem Ausmaß der Überlappung der Abdeckungsbereiche von Zellen (1, 2, 3, 4, 5), deren Abdeckungsbereiche bestimmt wurden, ein Gruppenelement oder -elemente abzudecken.

6. Verfahren nach einem der vorstehenden Ansprüche, umfassend vorzugsweise Auswählen größerer Zellen (1) für den Gruppenanruf.

7. Verfahren nach einem der vorstehenden Ansprüche, wobei die go-to-channel-Nachricht die Identität der für den Gruppenanruf ausgewählten Zelle (1) zusammen mit zusätzlicher Information zum Ermöglichen, dass das Gruppenelement (19, 20, 21, 22) auf der für den Gruppenanruf ausgewählten Zelle (1) übertragene Kommunikationen korrekt empfängt, aufweist.

8. Verfahren nach Anspruch 7, wobei die zusätzliche Information Details über einen Verschlüsselungscode und eine auf der für den Gruppenanruf ausgewählten Zelle (1) zu verwendenden Verschlüsselung aufweist.

9. Verfahren nach einem vorstehenden Anspruch, wobei Gruppenmitglieder (19, 20, 21, 22) selektiv automatisch zu ihrer vorherigen Zelle (7, 12, 14, 16) zurückgegeben werden können.

10. Verfahren nach einem der vorstehenden Ansprüche, wobei, während der Gruppenanruf läuft, ein Übergabemechanismus des Kommunikationssystems angeordnet ist, um vorzugsweise Gruppenmitglieder (19, 20, 21, 22) an Zellen (1) zu übergeben, die für den Gruppenanruf ausgewählt wurden.

11. Verfahren nach einem der vorstehenden Ansprüche, wobei, während der Gruppenanruf läuft, ein Übergabemechanismus des Kommunikationssystems angeordnet ist, um vorzugsweise Gruppenmitglieder (19, 20, 21, 22) an größere Zellen (1) überzugeben.

12. Verfahren nach einem der vorstehenden Ansprüche, wobei das Kommunikations-system ein einzelnes Kommunikationsnetzwerk umfasst.

13. Verfahren nach einem der Ansprüche 1 bis 11, wobei das Kommunikationssystem mehrere unterschiedliche Kommunikationsnetzwerke umfasst.

14. Vorrichtung zum Aufbau eines Gruppenanrufs in einem zellularen Mobilkommunikationssystem, das zwei oder mehr überlappende Schichten von Zellen (1, 2, 3, 4, 5, 7, 12, 14, 16) mit unterschiedlichen Abdeckungsbereichen aufweist, wobei die Vorrichtung umfasst:
Mittel zum, wenn ein Gruppenanruf aufzubauen ist, Bestimmen der Zellen (1, 2, 3, 4, 5) des Kommunikationssystems, deren Abdeckungsbereiche eine Zelle oder Zellen (7, 12, 14, 16) des Kommunikationssystems abdecken, in der/denen ein Mitglied oder Mitglieder (19, 20, 21, 22) der anzurufenden Gruppe registriert ist beziehungsweise sind, wobei diese bestimmten Zellen die Zellen (1, 2, 3, 4, 5) bilden, die für den Gruppenanruf verwendet werden könnten;
Mittel zum Auswählen der für den Gruppenanruf zu verwendenden Zelle oder Zellen (1) aus den Zellen, die für den Gruppenanruf verwendet werden könnten, basierend auf den einzelnen Abdeckungsbereichen der Zellen (1, 2, 3, 4, 5), die für den Gruppenanruf verwendet werden könnten;
Mittel zum Übertragen eines oder mehrerer der Gruppenmitglieder (19, 20, 21, 22) für den Gruppenanruf zu einer Zelle oder Zellen (1) der für den Gruppenanruf ausgewählten Zellen durch Übertragen einer go-to-channel-Nachricht, die die Mobileinheit des Gruppenmitglieds sendet, an einen Verkehrskanal einer für den Gruppenanruf ausgewählten Zelle (1); und
Mittel zum automatischen Zurückgeben eines Gruppenmitglieds (19, 20, 21, 22), das zu einer anderen Zelle (1) des Kommunikationssystems für den Gruppenanruf übertragen wurde, zu seiner vorherigen Zelle (7, 12, 14, 16) bei Beendigung seiner Teilnahme an dem Gruppenanruf.

15. Vorrichtung nach Anspruch 14, umfassend Mittel zum Auswählen der für den Gruppenanruf zu verwendenden Zelle oder Zellen (1), um die Anzahl der Zellen zu minimieren, die für den Gruppenanruf verwendet werden.

16. Vorrichtung nach Anspruch 14 oder 15, umfassend Mittel zum Auswählen der für den Gruppenanruf zu verwendenden Zelle oder Zellen (1) weiter basierend auf der geografischen Verteilung der Elemente (19, 20, 21, 22) der Gruppe.

17. Vorrichtung nach Anspruch 16, umfassend:
Mittel zum Vergleichen der Abdeckungsbereiche von Zellen (1, 2, 3, 4, 5), die bestimmt sind, Gruppenmitglieder (19, 20, 21, 22) in ihren Abdeckungsbereichen aufzuweisen, und der Verteilung der Gruppenmitglieder (19, 20, 21, 22); und
Mittel zum Auswählen der für den Gruppenanruf zu verwendenden Zelle oder Zellen (1) basierend auf diesem Vergleich.

18. Vorrichtung nach einem der Ansprüche 14 bis 17, umfassend Mittel zum Auswählen der für den Gruppenanruf zu verwendenden Zelle oder Zellen (1) weiter basierend auf dem Ausmaß der Überlappung der Abdeckungsbereiche von Zellen (1, 2, 3, 4, 5), deren Abdeckungsbereiche bestimmt wurden, ein Gruppenelement oder -elemente (19, 20, 21, 22) abzudecken.

19. Vorrichtung nach einem der Ansprüche 14 bis 18, umfassend Mittel zum Auswählen vorzugsweise größerer Zellen (1) für den Gruppenanruf.

20. Vorrichtung nach einem der Ansprüche 14 bis 19, wobei die go-to-channel-Nachricht die Identität der für den Gruppenanruf ausgewählten Zelle (1) zusammen mit zusätzlicher Information zum Ermöglichen, dass das Gruppenelement auf der für den Gruppenanruf ausgewählten Zelle (1) übertragene Kommunikationen korrekt empfängt, aufweist.

21. Vorrichtung nach einem der Ansprüche 14 bis 20, umfassend Übergabemittel, die angeordnet sind, um, während der Gruppenanruf läuft, vorzugsweise Gruppenmitglieder (19, 20, 21, 22) an Zellen (1) zu übergeben, die für den Gruppenanruf ausgewählt wurden.

22. Vorrichtung nach einem der Ansprüche 14 bis 21, umfassend Übergabemittel, die angeordnet sind, um, während der Gruppenanruf läuft, vorzugsweise Gruppenmitglieder (19, 20, 21, 22) an größere Zellen (1) zu übergeben.

23. Vorrichtung nach einem der Ansprüche 14 bis 22, wobei das Kommunikationssystem ein einzelnes Kommunikationsnetzwerk umfasst.

24. Vorrichtung nach einem der Ansprüche 14 bis 22, wobei das Kommunikationssystem mehrere unterschiedliche Kommunikationsnetzwerke umfasst.

25. Computerprogrammelement, das Computersoftwarecodeabschnitte zur Durchführung des Verfahrens nach einem der Ansprüche 1 bis 13, wenn das Programmelement auf Datenverarbeitungsmitteln ausgeführt wird, umfasst.

## Revendications

1. Procédé d'établissement d'appel de groupe dans un système de communication mobile cellulaire qui inclut deux couches chevauchantes de cellules (1, 2, 3, 4, 5, 7, 12, 14, 16) ou plus ayant des zones de couverture différentes, le procédé comprenant :
quand un appel de groupe doit être établi, la détermination des cellules (1, 2, 3, 4, 5) du système de communication dont les zones de couverture couvrent une cellule ou des cellules (7, 12, 14, 16) du système de communication où un membre ou des membres (19, 20, 21, 22) du groupe à appeler est ou sont respectivement enregistrés, ces cellules déterminées formant les cellules (1, 2, 3, 4, 5) qui pourraient être utilisées pour l'appel de groupe ;
la sélection, à partir desdites cellules qui pourraient être utilisées pour l'appel de groupe, de la cellule ou des cellules (1) à utiliser pour l'appel de groupe sur la base des zones de couverture individuelles des cellules (1, 2, 3, 4, 5) qui pourraient être utilisées pour l'appel de groupe ;
le transfert d'un ou plusieurs des membres du groupe (19, 20, 21, 22) pour l'appel de groupe à une cellule ou des cellules (1) des cellules sélectionnées pour l'appel de groupe en transmettant un message « go to channel » qui envoie l'unité mobile du membre du groupe à un canal de trafic d'une cellule (1) sélectionnée pour l'appel de groupe ; et
le renvoi automatique d'un membre du groupe (19, 20, 21, 22) qui a été transféré à une autre cellule (1) du système de communication pour l'appel de groupe à sa cellule précédente (7, 12, 14, 16) à la fin de sa participation dans l'appel de groupe.

2. Procédé selon la revendication 1, comprenant la sélection de la cellule ou des cellules (1) à utiliser pour l'appel de groupe de manière à minimiser le nombre de cellules qui seront utilisées pour l'appel de groupe.

3. Procédé selon la revendication 1 ou 2, comprenant la sélection de la cellule ou des cellules (1) à utiliser pour l'appel de groupe en outre sur la base de la distribution géographique des membres (19, 20, 21, 22) du groupe.

4. Procédé selon la revendication 3, comprenant :
la comparaison des zones de couverture de cellules (1, 2, 3, 4, 5) qui sont déterminées comme incluant des membres du groupe (19, 20, 21, 22) dans leurs zones de couverture et de la distribution des membres du groupe (19, 20, 21, 22) ; et
la sélection de la cellule ou des cellules (1) à utiliser pour l'appel de groupe en outre sur la base de cette comparaison.

5. Procédé selon l'une quelconque des revendications précédentes, comprenant la sélection de la cellule ou des cellules (1) à utiliser pour l'appel de groupe en outre sur la base de l'étendue de chevauchement des zones de couverture de cellules (1, 2, 3, 4, 5) dont les zones de couverture ont été déterminées comme couvrant un membre ou des membres du groupe.

6. Procédé selon l'une quelconque des revendications précédentes, comprenant de préférence la sélection de plus grandes cellules (1) pour l'appel de groupe.

7. Procédé selon l'une quelconque des revendications précédentes, dans lequel le message « go to channel » inclut l'identité de la cellule (1) sélectionnée pour l'appel de groupe, conjointement à des informations additionnelles qui permettent au membre du groupe (19, 20, 21, 22) de recevoir correctement des communications transmises sur la cellule (1) sélectionnée pour l'appel de groupe.

8. Procédé selon la revendication 7, dans lequel les informations additionnelles incluent des détails d'un code de brouillage et le chiffrement qui est utilisé sur la cellule (1) sélectionnée pour l'appel de groupe.

9. Procédé selon l'une quelconque des revendications précédentes, dans lequel des membres du groupe (19, 20, 21, 22) peuvent être renvoyés automatiquement de manière sélective à leur cellule précédente (7, 12, 14, 16).

10. Procédé selon l'une quelconque des revendications précédentes, dans lequel, alors que l'appel de groupe est en cours, un mécanisme de transfert du système de communication est agencé pour transférer des membres du groupe (19, 20, 21, 22) de manière préférentielle sur des cellules (1) qui ont été sélectionnées pour l'appel de groupe.

11. Procédé selon l'une quelconque des revendications précédentes, dans lequel, alors que l'appel de groupe est en cours, un mécanisme de transfert du système de communication est agencé pour transférer des membres du groupe (19, 20, 21, 22) de manière préférentielle sur de plus grandes cellules (1).

12. Procédé selon l'une quelconque des revendications précédentes, dans lequel le système de communication comprend un unique réseau de communication.

13. Procédé selon l'une quelconque des revendications 1 à 11, dans lequel le système de communication comprend plusieurs réseaux de communication différents.

14. Appareil pour l'établissement d'un appel de groupe dans un système de communication mobile cellulaire qui inclut deux couches chevauchantes de cellules (1, 2, 3, 4, 5, 7, 12, 14, 16) ou plus ayant des zones de couverture différentes, l'appareil comprenant :
des moyens pour, quand un appel de groupe doit être établi, déterminer les cellules (1, 2, 3, 4, 5) du système de communication dont les zones de couverture couvrent une cellule ou des cellules (7, 12, 14, 16) du système de communication où un membre ou des membres (19, 20, 21, 22) du groupe à appeler est ou sont respectivement enregistrés, ces cellules déterminées formant les cellules (1, 2, 3, 4, 5) qui pourraient être utilisées pour l'appel de groupe ;
des moyens pour sélectionner, à partir desdites cellules qui pourraient être utilisées pour l'appel de groupe, la cellule ou les cellules (1) à utiliser pour l'appel de groupe sur la base des zones de couverture individuelles des cellules (1, 2, 3, 4, 5) qui pourraient être utilisées pour l'appel de groupe ;
des moyens pour transférer un ou plusieurs des membres du groupe (19, 20, 21, 22) pour l'appel de groupe à une cellule ou des cellules (1) des cellules sélectionnées pour l'appel de groupe en transmettant un message « go to channel » qui envoie l'unité mobile du membre du groupe à un canal de trafic d'une cellule (1) sélectionnée pour l'appel de groupe ; et
des moyens pour renvoyer automatiquement un membre du groupe (19, 20, 21, 22) qui a été transféré à une autre cellule (1) du système de communication pour l'appel de groupe à sa cellule précédente (7, 12, 14, 16) à la fin de sa participation dans l'appel de groupe.

15. Appareil selon la revendication 14, comprenant des moyens pour sélectionner la cellule ou les cellules (1) à utiliser pour l'appel de groupe de manière à minimiser le nombre de cellules qui seront utilisées pour l'appel de groupe.

16. Appareil selon la revendication 14 ou 15, comprenant des moyens pour sélectionner la cellule ou les cellules (1) à utiliser pour l'appel de groupe en outre sur la base de la distribution géographique des membres (19, 20, 21, 22) du groupe.

17. Appareil selon la revendication 16, comprenant :
des moyens pour comparer les zones de couverture de cellules (1, 2, 3, 4, 5) qui sont déterminées comme incluant des membres du groupe (19, 20, 21, 22) dans leurs zones de couverture et la distribution des membres du groupe (19, 20, 21, 22) ; et
des moyens pour sélectionner la cellule ou les cellules (1) à utiliser pour l'appel de groupe en outre sur la base de cette comparaison.

18. Appareil selon l'une quelconque des revendications 14 à 17, comprenant des moyens pour sélectionner la cellule ou les cellules (1) à utiliser pour l'appel de groupe en outre sur la base de l'étendue de chevauchement des zones de couverture de cellules (1, 2, 3, 4, 5) dont les zones de couverture ont été déterminées comme couvrant un membre ou des membres du groupe (19, 20, 21, 22).

19. Appareil selon l'une quelconque des revendications 14 à 18, comprenant des moyens pour sélectionner de préférence de plus grandes cellules (1) pour l'appel de groupe.

20. Appareil selon l'une quelconque des revendications 14 à 19, dans lequel le message « go to channel » inclut l'identité de la cellule (1) sélectionnée pour l'appel de groupe, conjointement à des informations additionnelles qui permettent au membre du groupe de recevoir correctement des communications transmises sur la cellule (1) sélectionnée pour l'appel de groupe.

21. Appareil selon l'une quelconque des revendications 14 à 20, comprenant des moyens de transfert agencés pour, alors que l'appel de groupe est en cours, transférer des membres du groupe (19, 20, 21, 22) de manière préférentielle sur des cellules (1) qui ont été sélectionnées pour l'appel de groupe.

22. Appareil selon l'une quelconque des revendications 14 à 21, comprenant des moyens de transfert agencés pour, alors que l'appel de groupe est en cours, transférer des membres du groupe (19, 20, 21, 22) de manière préférentielle sur de plus grandes cellules (1).

23. Appareil selon l'une quelconque des revendications 14 à 22, dans lequel le système de communication comprend un unique réseau de communication.

24. Appareil selon l'une quelconque des revendications 14 à 22, dans lequel le système de communication comprend plusieurs réseaux de communication différents.

25. Elément de programme informatique comprenant des portions de code de logiciel informatique pour réaliser le procédé selon l'une quelconque des revendications 1 à 13 quand l'élément de programme est exécuté sur des moyens de traitement de données.
